# EUROPEAN PATENT SPECIFICATION

(11) **EP 3 509 410 B1**
(45) Date of publication and mention of the grant of the patent: **30.09.2020**
(21) Application number: 17849884.6
(22) Date of filing: 30.08.2017
(51) Int. Cl.: A01B 1/06, A01B 1/10, A01B 1/02, A01B 33/08, A01B 39/08, A01B 33/02

(54) **A HOEING MACHINE**
HACKMASCHINE
BINEUSE

(30) Priority: 08.09.2016 TR 201612860
(43) Date of publication of application: 17.07.2019
(73) Proprietor: Anadolu Motor Üretim Ve Pazarlama A.S., Kocaeli (TR)
(72) Inventor: USLU, Salih Güvenç, Kocaeli (TR); ALTAY, Mustafa, Kocaeli (TR); AKAY, Baris, Kocaeli (TR)
(74) Representative: Kaya, Erdem
(86) International application number: PCT/TR2017/050413
(87) International publication number: WO 2018/070966

(56) References cited:
- CN-Y- 201 378 920
- DE-U1-202009 014 994
- US-A1- 2004 250 649
- US-B1- 6 488 101

## Description

### TECHNICAL FIELD

The present invention relates to a hoeing machine having a drive means and a transmission box connected to said drive means in order to provide hoeing of the user in agricultural areas.

### PRIOR ART

In agricultural areas, hoeing machines are used for processing the soil and making the soil ready for agriculture.

Hoeing machines are provided in a geared form for providing realization of process with suitable torque in soils with different hardness and for providing power saving.

In hoeing machines, manual cultivators or manual tractors in the present art, fixed transmission proportion or some alternative forward gear transmission proportion is provided.

In the Turkish patent with application number 2015/00723, a hoeing machine which is controlled by means of control system with manual transmission is disclosed. The documents US 2004/250649 A1, DE 20 2009 014994 U1, US 6 488 101 B1 and CN 201 378 920 Y disclose known hoeing machines with transmission boxes.

In mechanisms with manual transmission, various problems may occur. These problems include the problems which may occur due to the presence of clutch, the usage difficulties occurring depending on gear usage and maintenance difficulties of the mechanism depending on lubrication needs.

As a result, because of all of the abovementioned problems, an improvement is required in the related technical field.

### BRIEF DESCRIPTION OF THE INVENTION

The present invention relates to a hoeing machine, for eliminating the above mentioned disadvantages and for bringing new advantages to the related technical field.

The main object of the present invention is to provide a hoeing machine which provides usage facility to the user.

Another object of the present invention is to provide a hoeing machine where the labor safety of the user is increased.

Another object of the present invention is to provide a hoeing machine where routine maintenance need is reduced.

In order to realize all of the abovementioned objects and the objects which are to be deducted from the detailed description below, the present invention is a hoeing machine having a drive means and a transmission box connected to said drive means in order to provide hoeing of the user in agricultural areas. Accordingly, said transmission box comprises at least one continuously changing gearbox. Thus, the problems faced in manual systems are eliminated.

In a preferred embodiment of the invention, at least one gear mechanism, which is connected to the continuously changing gearbox, is provided. Thus, the direction of the movement provided by the continuously changing gearbox can be changed.

In a preferred embodiment of the invention, at least one transmission body is provided which transfers power to an axle shaft connected to the rotary blades, where said transmission body is connected to the gear mechanism from one side.

In a preferred embodiment of the invention, said gear mechanism comprises at least one mirror gear connected to a gearbox output shaft of the continuously changing gearbox, and at least one drive pinion connected to the transmission body.

In a preferred embodiment of the invention, a transmission gear and an inner gear are provided, in order to provide connection of the gearbox output shaft and the drive pinion. Thus, the direction of the movement provided by the continuously changing gearbox can be changed.

In a preferred embodiment of the invention, at least one direction modifier is provided in order to provide connection of the drive pinion and the mirror gear shaft and the inner gear. In a preferred embodiment of the invention, at least one gear arm is provided which is connected to said direction modifier provided on the gear mechanism. Thus, the user can control the direction modifier and can provide transmission of the movement, received from the continuously changing gearbox, through the mirror gear shaft or through the inner gear such that said movement is in the forward or backward direction.

In a preferred embodiment of the invention, the gear mechanism is a planet gear mechanism.

### BRIEF DESCRIPTION OF THE FIGURES

In Figure 1, a general lateral view of the hoeing machine is given.

In Figure 2, a frontal representative view of the hoeing machine is given.

In Figure 3, the perspective view of the hoeing machine is given.

In Figure 4, a view of the hoeing machine comprising handle bar and transmission box is given.

In Figure 5, the representative view of the relation between the drive means, transmission box, transmission body and rotary blades is given.

In Figure 6, the representative view of the items included by the control mechanism is given.

In Figure 7, a representative view of forward movement transmission from the gear mechanism is given.

In Figure 8, a representative view of the backward movement transmission from the gear mechanism is given.

### REFERENCE NUMBERS

- 10: Hoeing machine
- 12: Chassis
- 13: Front region
- 14: Bracket
- 15: Engine housing
- 16: Drive means
- 17: Output shaft
- 19: Transmission box
- 20: Axle shaft
- 21: Transmission body
- 22: Rotary mechanism 221 Rotary blade
- 23: Intermediate bracket
- 24: Handle bar
- 25: Control mechanism
252 Start-stop arm
254 Gear arm
256 Gas arm
- 26: Enclosure
- 27: Rear region
- 28: Track item carrier
- 29: Connection element
- 30: Track item

- 40: Continuously changing gearbox
- 41: Gearbox output shaft
- 50: Gear mechanism
- 51: Mirror gear
- 52: Mirror gear shaft
- 53: Transmission gear
- 54: Inner gear
- 55: Direction modifier
- 56: Drive pinion
- 57: Second mirror gear

### DETAILED DESCRIPTION OF THE INVENTION

In this detailed description, the subject matter hoeing machine (10) is explained with references to examples without forming any restrictive effect only in order to make the subject more understandable.

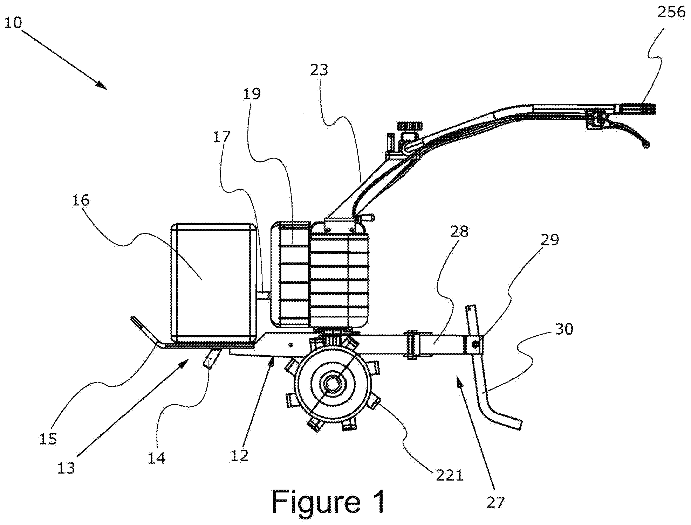

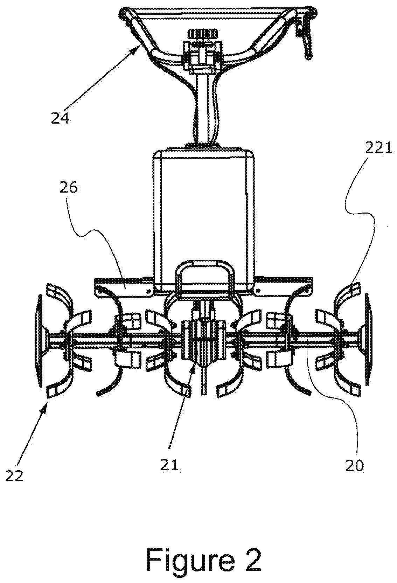

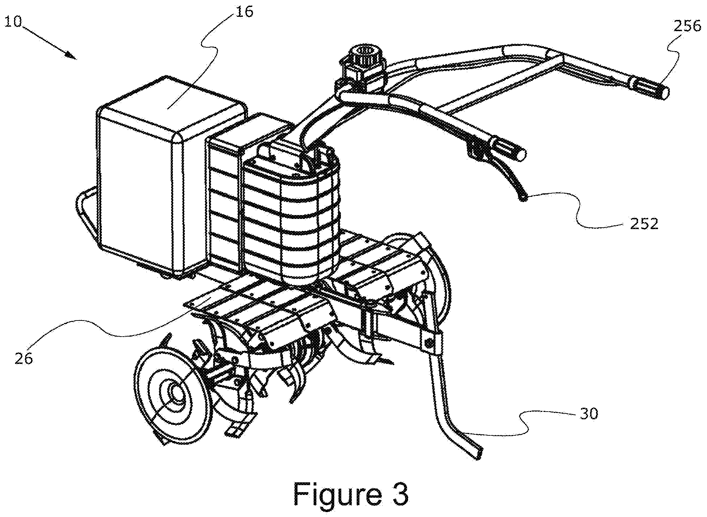

With reference to Figure 1, 2, 3 and 4, the subject matter hoeing machine (10) essentially comprises a chassis (12), a drive means (16) positioned on said chassis (12), a transmission box (19) connected to said drive means (16), a transmission body (21) connected to said transmission box (19) and a rotary blade (221) connected to said transmission body (21).

The chassis (12) may preferably have a profile form. An engine enclosure (15) section is positioned at the front region (13) of the chassis (12). The drive means (16) is placed to said engine enclosure (15) section.

There is a rotary mechanism (22) comprising pluralities of rotary blades (221) positioned at the periphery of said axle shaft (20) and connected to an axle shaft (20) positioned at the lower section of the chassis (12). A transmission body (21), which provides transmission of the power, coming from the transmission box (19), to the rotary blades (221) is connected to the axle shaft (20). The rotary blades (221), included by said rotary mechanism (22), realize the hoeing process. On the chassis (12), an enclosure (26) section is positioned at the upper section of the rotary blades (221). Said enclosure (26) sections are provided in pluralities of numbers. The enclosures (26) partially prevent the contact of the rotary blades (221) and the contact of the objects scattered by the rotary blades (221) to the user.

At the front region (13) of the chassis (12), a bracket (14) is connected under the engine enclosure (15) section. Wheel or leg can be connected to said bracket (14).

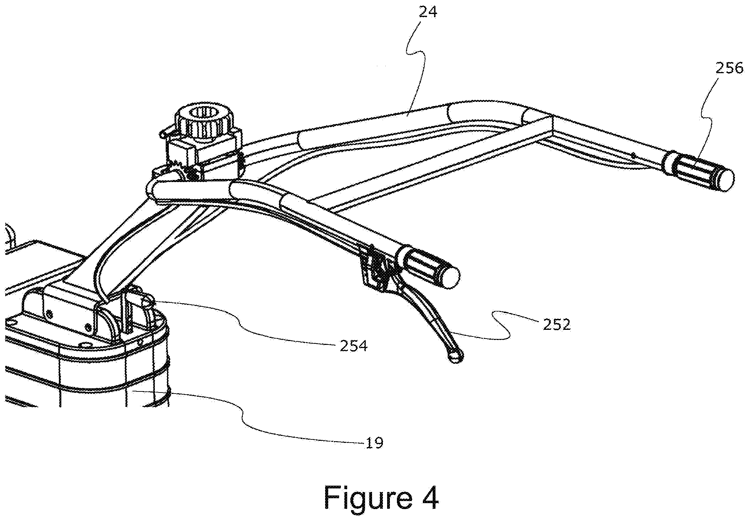

With reference to Figure 4, a handle bar (24) is connected to the transmission box (19) by means of an intermediate bracket (23). The handle bar (24) may be in similar structure to the handle bar (24) structure provided in motorcycles or bicycles.

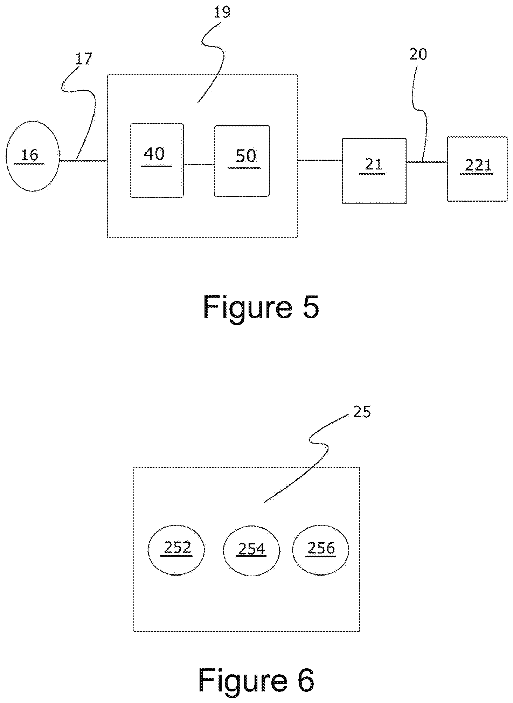

With reference to Figure 5, in the preferred embodiment, the drive means (16) is an engine. The drive means (16) generates torque and the generated torque is transferred to said transmission box (19) by means of an output shaft (17). The transmission box (19) provides infinite forward continuous transmission proportion in the range of a specific transmission proportion. A continuously changing gearbox (40), positioned inside the transmission box (19), provides this. Said continuously changing gearbox (40) is known as CVT mechanism in the related art. The continuously changing gearbox (40) generates an output by means of proportionally increasing or decreasing the rotation speed of the drive means (16). There is a gear mechanism (50) connected to the continuously changing gearbox (40).

Preferably, the intermediate bracket (23) is connected to a gear arm (254). Said gear arm (254) is the item which determines the forward or backward movement of the hoeing machine (10) or said gear item (254) determines that the hoeing machine (10) is going to stay still.

With reference to Figure 6, the hoeing machine (10) also comprises a control mechanism (25) connected to the transmission box (19) and where the user realizes usage adjustments. Said control mechanism (25) essentially comprises a start arm, a gas arm (256) and a start-stop arm (252). Said gas arm (256), which provides the user to realize gas adjustment, is positioned on the handle bar (24). The gas arm (256) is preferably provided at the end section of the handle bar (24) in a manner corresponding to the place where the user puts his/her hand. The gas arm (256) controls the revolution of the drive means (16), and when the drive means (16) is not rotated, it provides idle running revolution of the drive means (16) in a similar manner to the motorcycles. The revolution, which is reduced to the idle running level, stops rotation of the rotary blades (221) thanks to the continuously changing gearbox (40). In the hoeing machine (10), in case forward gear is selected above a specific revolution, the hoeing machine (10) can move in the forward direction.

Said start-stop arm (252) can control the ignition system or fuel system of the drive means (16). When the drive means (16) is an engine which operates with spark plug ignition, the start-stop arm (252) shall be continuously pressed in order for the drive means (16) to realize ignition. When the start-stop arm (252) is stopped to be pressed, the drive means (16) stops by means of stopping ignition. When the drive means (16) is a diesel engine, fuel can be applied to the drive means (16) when the start-stop arm (252) is in pressed condition, and the fuel is stopped when the start-stop arm (252) is no more pressed.

The hoeing machine (10) moreover comprises a track item carrier (28) connected to the rear region (27) of the chassis (12). A track item (30) is connected to said track item carrier (28) by means of a connection element (29). Said track item (30) describes a piece which may have a structure which is similar to letter L extending, at a substantially orthogonal position, until the floor. Said track item (30) provides stabilization of the movement of the hoeing machine (10) and orientation of the hoeing machine (10) in hoed/rooted soil areas. Besides, the track item (30) prevents tilting of the hoeing machine (10) backwardly.

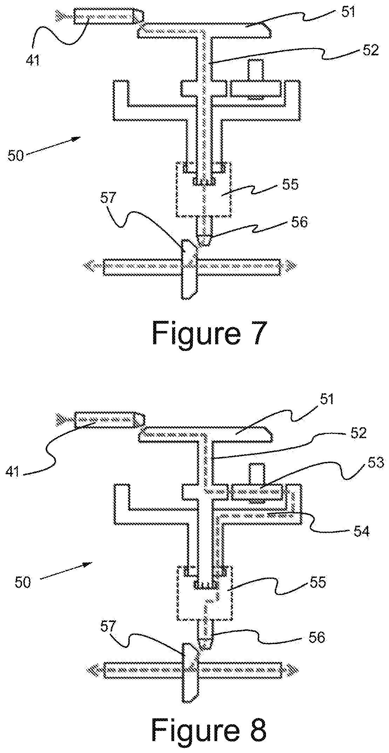

With reference to Figure 7 and 8, in a probable embodiment of the invention, the gear mechanism (50) is a planet gear mechanism. The gear mechanism (50) is connected to the gearbox output shaft (41) of the continuously changing gearbox (40). Thanks to the gear mechanism (50), the direction of the movement coming to the continuously changing gearbox (40) from the drive means (16) can be changed. Thanks to this, the hoeing machine (10) can be moved forwardly and backwardly or can be stopped by means of this movement.

In more details;
With reference to Figure 7, there is a mirror gear (51) connected to the gearbox output shaft (41) of the continuously changing gearbox (40). By means of the mirror gear (51), the direction of the movement coming from the gearbox output shaft (41) is changed. In other words, the gearbox output shaft (41) rotating horizontally rotates a mirror gear shaft (52) extending vertically thanks to the mirror gear (51). The mirror gear shaft (52) is connected to a drive pinion (56) by means of a direction modifier (55). There is a second mirror gear (57) connected to the drive pinion (56). Thus, the movement coming from the drive pinion (56) is transferred to the second mirror gear (57) and to the transmission body (21) from there. By means of this, movement is provided in the forward direction.

With reference to Figure 8, after the movement received from the output shaft (41) is transferred to the mirror gear shaft (52) by means of the mirror gear (51), the movement is transferred to an inner gear (54) by means of a transmission gear (53) connected to the gear shaft (52). Thanks to the passage of movement from the transmission gear (53) to the inner gear (54), the rotation direction is changed. Moreover, thanks to the dimension difference between the transmission gear (53) and the inner gear (54), the rotation speed is reduced. By means of the direction modifier (55), the inner gear (54) is connected to the drive pinion (56). Thus, the rotation movement in the inner gear (54) is transferred to the second mirror gear (57) by means of the drive pinion (56) and to the transmission body (21) from there. By means of this, backward movement is obtained.

The user controls the direction modifier (55) by moving the gear arm (254). In other words, by means of the movement of the gear arm (254), it is selected whether movement is driven by the mirror gear shaft (52) or by the inner gear (54). Thus, it is controlled whether the movement is forward or backward.

The operation of the invention whose details are given above is as follows:
In order to realize forward torque transfer from the drive means (16), drive shall be realized above a specific revolution. In idle running revolution, the transmission box (19) cannot provide torque transfer. Therefore, in order to provide forward movement, gas arm (256) is used and at least some amount of gas shall be applied.

In the subject matter hoeing machine (10), infinite transmission proportion is presented within specific transmission proportions. In other words, in order to provide the required torque in accordance with the needs and the load, the output speed can be continuously changed in a non-stepped manner. Within the defined transmission range, the output speed may change. The gear changing durations of the continuously changing gearboxes (40) is very short and this contributes positively to the operation performance of the hoeing machine (10). In other words, the gears can be changed with a continuous passage in very short durations, and a hoeing machine (10) is obtained without needing any intervention except application of gas by the user. Since there is no need of lubrication in the continuously changing gearbox (40), the maintenance of the continuously changing gearbox is easier. The continuously changing gearbox (40) does not comprise clutch. Thus, problems resulting from clutch are eliminated.

## Claims

1. A hoeing machine (10) having a drive means (16) and a transmission box (19) connected to said drive means (16) in order to provide hoeing of the user in agricultural areas, **characterized in that** said transmission box (19) comprises:
at least one continuously changing gearbox (40),
at least one gear mechanism (50) which is connected to said continuously changing gearbox (40),
at least one transmission body (21) is provided which transfers power to an axle shaft (20) connected to at least one rotary blade (221), where said transmission body (21) is connected to said gear mechanism (50) from one side,
the gear mechanism (50) comprises at least one mirror gear (51) connected to a gearbox output shaft (41) of the continuously changing gearbox (40) for providing forward movement, a mirror gear shaft (52) extending vertically and driven by said mirror gear (51), a drive pinion (56) where said mirror gear shaft (52) is connected by means of a direction modifier (55), a second mirror gear (57) connected to said drive pinion (56) and which transfers the movement, coming from the drive pinion (56), to said transmission body (21),
at least one transmission gear (53) connected to said mirror gear shaft (52) and which receives the movement transferred through the mirror gear (51) for providing backward movement, at least one inner gear (54) connected to said transmission gear (53) and which provides changing of the rotation direction by means of transferring the movement, transferred from the transmission gear (53), to said direction modifier (55) and to the second mirror gear (57) and to the drive pinion (56) connected to the direction modifier (55).

2. A hoeing machine (10) according to any one of the preceding claims, **characterized in that** the gear mechanism (50) is a planet gear mechanism.

## Patentansprüche

1. Hackmaschine (10) mit einer Antriebseinrichtung (16) und einem Getriebekasten (19), die mit der Antriebseinrichtung (16) verbunden sind, um dem Benutzer das Hacken in landwirtschaftlichen Gebieten zu ermöglichen, **dadurch gekennzeichnet, dass** der Getriebekasten (19) folgendes umfasst:
mindestens ein stufenloses Getriebe (40),
mindestens ein Getriebemechanismus (50), der mit dem stufenlosen Getriebe (40) verbunden ist,
mindestens ein Übertragungskörper (21), der die Kraft auf eine Achswelle (20) überträgt, die mit mindestens einem Drehmesser (221) verbunden ist, wobei der Übertragungskörper (21) von einer Seite mit dem Getriebemechanismus (50) verbunden ist,
wobei der Getriebemechanismus (50) mindestens ein Kegelgetriebe (51) umfasst, das mit einer Getriebeabtriebswelle (41) des stufenlosen Getriebes (40) verbunden ist, so dass eine Vorwärtsbewegung bereitgestellt wird, eine Kegelgetriebewelle (52), die sich vertikal erstreckt und vom Kegelgetriebe (51) angetrieben wird, ein Antriebsritzel (56) wo die Kegelgetriebewelle (52) mittels eines Richtungswechslers (55) verbunden ist, ein zweites Kegelgetriebe (57), das mit dem Antriebsritzel (56) verbunden ist und die vom Antriebsritzel (56) übertragene Bewegung auf den Übertragungskörper (21) überträgt,
mindestens ein Übersetzungsgetriebe (53), das mit der Kegelgetriebewelle (52) verbunden ist und die vom Kegelgetriebe (51) übertragene Bewegung aufnimmt, so dass eine Rückwärtsbewegung bereitgestellt wird, mindestens ein Innenrad (54), das mit dem Übersetzungsgetriebe (53) verbunden ist und für das Wechseln der Drehrichtung sorgt, in dem es die vom Übersetzungsgetriebe (53) übertragene Bewegung auf den Richtungswechsler (55), auf das zweite Kegelgetriebe (57) und auf das mit dem Richtungswechsler (55) verbundene Antriebsritzel (56) überträgt.

2. Hackmaschine (10) nach einem der vorhergehenden Ansprüche, **dadurch gekennzeichnet, dass** der Getriebemechanismus (50) ein Planetengetriebe ist.

## Revendications

1. Une machine à biner (10) ayant un moyen d'entraînement (16) et une boîte de transmission (19) connectée auxdits moyens d'entraînement (16) afin de fournir le binage de l'utilisateur dans des zones agricoles, **caractérisée en ce que** ladite boîte de transmission (19) comprend :
au moins une boîte d'engrenage à changement continu (40)
au moins un mécanisme d'engrenage (50) qui est connecté à ladite boîte d'engrenage à changement continu (40),
au moins un corps de transmission (21) est prévu transférant la puissance à un arbre d'essieu (20) connecté à au moins une lame rotative (221), où ledit corps de transmission (21) est connecté audit mécanisme d'engrenage (50) d'un côté, le mécanisme d'engrenage (50) comprend au moins un engrenage de miroir (51) relié à un arbre de sortie de boîte de vitesses (41) de la boîte d'engrenage à changement continu (40) pour fournir un mouvement vers l'avant, un arbre d'engrenage de miroir (52) s'étendant verticalement et entraîné par ledit engrenage de miroir (51), un pignon d'entraînement (56) où ledit arbre d'engrenage de miroir (52) est connecté au moyen d'un modificateur de direction (55), un deuxième engrenage de miroir (57) relié audit pignon d'entraînement (56) et qui transfère le mouvement, provenant du pignon d'entraînement (56), audit corps de transmission (21), au moins un engrenage de transmission (53) connecté audit arbre d'engrenage de miroir (52) et qui reçoit le mouvement transféré à travers l'engrenage de miroir (51) pour fournir un mouvement vers l'arrière, au moins un engrenage intérieur (54) relié audit engrenage de transmission (53) et qui assure le changement du sens de rotation au moyen du transfert du mouvement, transféré de l'engrenage de transmission (53), audit modificateur de direction (55) et au deuxième engrenage de miroir (57) et au pignon d'entraînement (56) connecté au modificateur de direction (55).

2. Une machine à biner (10) selon l'une des revendications précédentes, **caractérisée en ce que** le mécanisme d'engrenage (50) est un mécanisme d'engrenage planétaire.
